# EUROPÄISCHE PATENTANMELDUNG

(11) **EP 3 323 551 A1**
(43) Veröffentlichungstag der Anmeldung: **23.05.2018**
(21) Anmeldenummer: 16199432.2
(22) Anmeldetag: 18.11.2016
(51) Int. Cl.: B23Q 11/00, B08B 9/00, E21B 21/00

(54) **VORRICHTUNG ZUM REINIGEN VON BOHRLÖCHERN**

(71) Anmelder: Inventio AG, 6052 Hergiswil (CH)
(72) Erfinder: CAMBRUZZI, Andrea, 8057 Zürich (CH); BÜTLER, Erich, 6030 Ebikon (CH); BITZI, Raphael, 6006 Luzern (CH); ZIMMERLI, Philipp, 4624 Härkingen (CH)

(57) **Zusammenfassung**

Die Erfindung betrifft eine Vorrichtung zum Reinigen von Bohrlöchern (1), umfassend ein Reinigungselement (2) mit einem Betätigungsende (16), welches in Richtung eines zu reinigenden Bohrlochs (1) orientiert ist, wobei
das Reinigungselement (2) derart an einer Bohrvorrichtung (10) mit einem Bohrer (11), welcher eine Bohrerspitze (17) aufweist, montierbar ist, dass es im montierten Zustand von einer Ruheposition in eine Reinigungsposition und von einer Reinigungsposition in eine Ruheposition bringbar ist, und dass das Betätigungsende (16) des Reinigungselements (2) in der Reinigungsposition in Richtung einer Bohrachse (15) über die Bohrerspitze (17) hinausragt und in der Ruheposition hinter der Bohrerspitze (17) angeordnet ist.

## Beschreibung

Die Erfindung betrifft eine Vorrichtung zum Reinigen von Bohrlöchern, eine Anordnung zum Bohren und Reinigen, eine Montagevorrichtung zum Montieren von Halte- oder Führungselementen in einem Aufzugsschacht und ein Verfahren zum Reinigen von Bohrlöchern.

Bei der Montage eines Aufzuges ist eine Vielzahl von Bauteilen an verschiedenen Positionen innerhalb des Aufzugschachtes zu montieren. Hierfür müssen unter anderem Löcher in eine Schachtwand gebohrt werden. Insbesondere bei sehr langen Aufzugsanlagen, sogenannten High-Rise-Aufzügen, mithilfe derer grosse Höhenunterschiede Gebäuden überwunden werden, kann die Anzahl von in dem Aufzugsschacht zu installierenden Bauteilen sehr gross sein. Daher können Installationsvorgänge einen erheblichen Installationsaufwand sowie hohe Installationskosten mit sich bringen.

Es ist daher vorteilhaft, wenn die Montageschritte zumindest teilautomatisiert und präzise durchgeführt werden, damit keine Nachbearbeitung notwendig ist. Beispielsweise sollen Bohrlöcher möglichst unmittelbar nach dem Bohren bereit sein zum Anschrauben von Halteprofilen.

In dem Bohrloch verbleiben nach dem Bohren typischerweise Reste des Baumaterials, auch Bohrklein und Bohrstaub genannt. Die Menge des Materials hängt von der Bohrlochgröße und dem Bohrwinkel ab. Das Material kann die Montage eines Befestigungselements im Bohrloch beeinträchtigen. Daher wird das Material zumeist vor dem Einbringen des Befestigungselements entfernt.

Das Reinigen der Bohrlöcher garantiert Bohrlöcher mit definiertem Volumen und mit definierter Qualität.

Die Bohrlochreinigung kann darin bestehen, das Bohrklein und den Bohrstaub vom Bohrloch durch Blas oder Sauggeräte zu entfernen.

DE 7310075 offenbart eine Reinigungsvorrichtung mit Sauggebläse, bei welchem eine den Bohrer umgebende Hülse achsparallel mit der Bohrachse verschiebbar ist, so dass sie sich über den Bereich der Bohrtiefe an das Bohrgut anpresst.

Die Saugvorrichtung entfernt zwar den während des Bohrens nach aussen dringendes Bohrklein und Bohrstaub, nicht aber den von dem Bohrer gegen die Wandflächen des Bohrlochs gedrücktes Bohrklein und Bohrstaub.

Dieser kann beispielsweise mit einem Bürstenwerkzeug, wie es in
DE 10 2010 10 063 859 gezeigt ist, mechanisch abgelöst und wieder durch das Blas- oder Sauggerät aus dem Bohrloch entfernt werden.

Die den Bohrer umgebende Saugvorrichtung, deren Hülse immer im Bereich der Bohrerspitze angeordnet ist, hat überdies den Nachteil, dass der Bohrvorgang nicht mit einem optischen oder akustischen Sensor überwacht werden kann. Dies kann insbesondere bei einer automatisierten Montage von Bedeutung sein, wenn die Bohrung nicht von einer Person, sondern von einer Maschine oder einem Roboter durchgeführt wird. Das Heranführen des Bohrers an die geplante Bohrstelle und die Kontrolle der Bohrung kann beispielweise mit Hilfe eines optischen Sensors, zum Beispiel einer Kamera, durchgeführt werden. Eine den Bohrer umgebende Saugvorrichtung würde den Blick auf den Bohrer behindern.

Die den Bohrer umgebende Saugvorrichtung hat überdies den Nachteil, dass die Saugvorrichtung Bauraum im Bereich des Bohrers und insbesondere im Bereich der Bohrerspitze beansprucht. Damit kann es vorkommen, dass es eine den Bohrer umgebende Saugvorrichtung unmöglich macht, an schwer zugänglichen Stellen im Aufzugsschacht zu bohren.

Es besteht daher die Aufgabe, die Nachteile des Bekannten zu vermeiden. Insbesondere sollen eine Vorrichtung zum Reinigen von Bohrlöchern, eine Anordnung zum Bohren und Reinigen, eine Montagevorrichtung zum Montieren von Halte oder Führungselementen in einem Aufzugsschacht und ein Verfahren zum Reinigen von Bohrlöchern bereitgestellt werden, mit welchen Bohrlöcher einfach von Bohrklein und Bohrstaub befreit werden können, eine Kontrolle des Bohrlochs nicht behindert wird und/oder einen Bohrvorgang möglichst wenig behindert.

Die Aufgabe wird erfindungsgemäss gelöst durch eine Vorrichtung zum Reinigen von Bohrlöchern, die ein Reinigungselement mit einem Betätigungsende, welches in Richtung eines zu reinigenden Bohrlochs orientiert ist, umfasst.

Das Reinigungselement ist derart an eine Bohrvorrichtung montierbar, dass es im montierten Zustand von einer Ruheposition in eine Reinigungsposition und von einer Reinigungsposition in eine Ruheposition bringbar ist. Das Betätigungsende des Reinigungselements reicht in der Reinigungsposition in Richtung einer Bohrachse zumindest bis zur Bohrerspitze und ragt insbesondere über die Bohrerspitze hinaus. Das Betätigungsende hat damit zumindest den gleichen oder einen geringeren Abstand zu einer Wand, in der das Bohrloch gebohrt wird, als die Bohrerspitze. In der Ruheposition ist das Betätigungsende des Reinigungselements hinter der Bohrerspitze angeordnet. Es hat damit einen grösseren Abstand zur Wand, in der das Bohrloch gebohrt wird, als die Bohrerspitze.

Das Reinigungselement ist damit derart montierbar, dass das Betätigungsende in der Reinigungsposition an das oder in das Bohrloch führbar ist und in der Ruheposition einen Abstand von der Wand, in der das Bohrloch gebohrt wird, aufweist, der grösser ist als der Abstand in der Reinigungsposition.

Das Reinigungselement hat in der Reinigungsposition eine andere räumliche Lage als in der Ruheposition. Dazu ist es bewegbar.

Die Bohrachse liegt auf der Längsachse des Bohrers.

Das Reinigungselement befindet sich im montierten Zustand zum Beispiel neben dem Bohrer.

Das Reinigungselement ist zum Reinigen des Bohrlochs betreibbar. Zum Beispiel kann es zumindest teilweise in eine Bewegung versetzbar sein, es kann zum Ausstossen von Reinigungsfluid, insbesondere von Pressluft dienen oder es kann zum Einsaugen von Staub dienen. In der Regel soll das Reinigungselement in der Reinigungsposition betrieben werden und in der Ruheposition nicht betrieben werden. Das Reinigungselement kann aber auch in der Ruheposition betrieben werden, um zum Beispiel die Umgebung des Bohrlochs zu reinigen.

Das Reinigungselement umfasst bevorzugt ein Betätigungsende mit einem Förderelement für Bohrstaub. Bei dem Förderelement kann es sich um ein mechanisches Werkzeug handeln, wie eine Bürste, einen Schieber oder Kratzer. Bei dem Förderelement kann es sich auch um eine Öffnung zum Auslassen eines Reinigungsfluids, wie Pressluft, oder um eine Absaugöffnung handeln.

Das Reinigungselement ist bevorzugt als längliches Bauteil ausgeführt. Im montierten Zustand ist die Längsachse des Reinigungselements parallel zu der Bohrachse angeordnet.

Es kann beispielsweise entlang der Bohrachse verschoben werden, sodass das Betätigungsende in der Ruheposition gegenüber der Wand oder der Bohrerspitze zurückgezogen ist. Im montierten Zustand ist das Reinigungselement in der Ruheposition also nicht in der Nähe der Bohrspitze. Das Reinigungselement kann somit vor und/oder während des Bohrens in der Ruheposition sein, sodass eine Kontrolle des Bohrers ermöglicht wird.

Nach erfolgter Bohrung kann das Reinigungselement in die Reinigungsposition überführt werden und zum Reinigen des Bohrlochs eingesetzt werden. Dazu kann es notwendig sein, die Position der Bohrvorrichtung zu verändern, damit das Betätigungsende an und/oder in das Bohrloch geführt werden kann.

Typischerweise ist das Reinigungselement von der Ruheposition in die Reinigungsposition und umgekehrt bewegbar, zum Beispiel schiebbar, klappbar oder drehbar. Das Reinigungselement kann eine funktionale Aussenfläche, beispielsweise ein Aussengewinde, eine Nut oder Zahnung aufweisen, mit welcher es über ein Gegenstück an der Bohrvorrichtung führbar ist. Das Reinigungselement kann auch eine Gelenkanbindung aufweisen, die an einem Gegenstück an der Bohrvorrichtung angeordnet ist.

In einer bevorzugten Ausführung der Vorrichtung umgreift oder umschliesst das

Reinigungselement im montierten Zustand die Bohrachse der Bohrvorrichtung nicht, zumindest nicht im Bereich des Bohrers, also zwischen Bohrerspitze und Bohrfutter. Damit wird die Kontrolle des Bohrlochs und der Bohrvorgang selbst sehr wenig behindert.

In einer vorteilhaften Ausführung der Erfindung ist das Reinigungselement zumindest teilweise in ein Bohrloch einführbar. Dazu weist bevorzugt das Reinigungselement ein Betätigungsende auf, dessen Durchmesser kleiner ist oder kleiner einstellbar ist als die typischen Bohrlochdurchmesser. Der Bohrstaub kann damit gezielt aus dem Bohrloch entfernt werden.

In einer bevorzugten Ausführung der Vorrichtung umfasst die Vorrichtung ein Basiselement. Das Reinigungselement ist bezüglich des Basiselements zwischen der Ruheposition und der Reinigungsposition bewegbar, wobei sich das Reinigungselement in der Reinigungsposition von dem Basiselement weiter weg erstreckt als in der Ruheposition.

In der Ruheposition befindet sich das Reinigungselement insbesondere zumindest teilweise innerhalb des Basiselements oder neben, hinter, unter oder über dem Basiselement.

Bevorzugt sind das Reinigungselement und das Basiselement teleskopartig zueinander bewegbar.

Dadurch kann sich in der Ruheposition eine kompakte Anordnung von Reinigungselement und Basiselement ergeben, die dazu beiträgt, dass die Vorrichtung zum Reinigen den Bohrvorgang und/oder das Heranbringen des Bohrers an die Bohrstelle nicht stört.

Das Basiselement kann fest mit einer Bohrvorrichtung oder einer Montagevorrichtung verbunden oder verbindbar sein.

Die Bewegung von der Ruheposition in die Reinigungsposition ist nicht abhängig von der Bohrvorrichtung oder von der Befestigung an der Bohrvorrichtung. Die Vorrichtung zum Reinigen kann daher mit den unterschiedlichsten Bohrvorrichtungen verwendet werden.

In dem Basiselement kann ein Aktuator angeordnet sein, der dafür sorgt, dass das Reinigungselement den Reinigungsbetrieb aufnimmt. Das Basiselement kann ein Antriebselement umfassen, welches das Reinigungselement in eine Reinigungsbewegung versetzt und/oder in eine Reinigungsposition bringt, und/der das Basiselement kann Versorgungsanschlüsse bereitstellen, zum Beispiel für eine elektrische Versorgung oder eine Versorgung mit einem Reinigungsfluid.

In einer vorteilhaften Ausführung der Erfindung ist das Reinigungselement bezüglich des Basiselements verschiebbar, insbesondere entlang einer Längsachse des Reinigungselements. Die Verschiebebewegung benötigt wenig Platz, so dass die Vorrichtung zum Reinigen auch während des Übergangs von der Ruheposition in die Reinigungsposition und umgekehrt einen geringen Platzbedarf hat. Für den Einsatz der Vorrichtung zum Reinigen muss insgesamt wenig Raum einkalkuliert werden, was die möglichen Einsatzgebiete erweitert und den Einsatz auch dann erlaubt, wenn wenig Platz zur Verfügung steht.

Die Vorrichtung zum Reinigen kann so nah an einem Bohrer positioniert werden kann, dass kein aufwendiges Um oder Neupositionieren nach dem Bohrvorgang notwendig ist und es trotzdem nicht zu einer gegenseitigen Beeinträchtigung von Bohrer und Reinigungsvorrichtung kommen kann.

Insbesondere weist das Basiselement einen Hohlraum zur Aufnahme des Reinigungselements in der Ruheposition auf. Das Reinigungselement ist zumindest teilweise von dem Basiselement aufnehmbar, wenn es nicht im Einsatz befindet. In der Ruheposition nimmt die Vorrichtung zum Reinigen also eine besonders kompakte Anordnung mit sehr geringem Platzbedarf ein. Zudem ist das Reinigungselement in der Ruheposition durch das Basiselement geschützt und kann nicht durch andere Bauaktivitäten beschädigt oder verschmutzt werden.

Vorteilhafterweise ist das Reinigungselement gefedert gelagert, insbesondere gegenüber dem Basiselement. Dazu ist in der Vorrichtung zum Reinigen ein Federelement vorgesehen. Bei schwierigen baulichen Gegebenheiten oder bei einem automatisierten Betrieb kann es zu Kollisionen des Reinigungselements mit der Wand, mit Bauteilen oder anderen Montagemitteln kommen. Das Risiko der Beschädigung wird durch die Federung vermindert.

Insbesondere wirkt die Federkraft eines Federelements auf das Reinigungselement derart, dass das Reinigungselement ohne weitere äussere Kraft in die Ruheposition gelangt oder darin verbleibt. Ohne zusätzliche Krafteinwirkung nimmt das Reinigungselement daher die Ruheposition und damit eine kompakte Anordnung ein.

Bevorzugt weist das Basiselement einen Anschluss für ein Fluid, insbesondere ein Reinigungsfluid, zum Beispiel Pressluft, auf. An dem Basiselement kann eine Leitung für Reinigungsfluid anschliessbar sein.

Das Basiselement wirkt nicht nur als Halter und/oder Aufnahme für das Reinigungselement, sondern auch als Versorger für Strom und/oder Fluid.

Mit einem Fluid, zum Beispiel Pressluft, kann das Reinigungselement in eine Bewegung versetzt werden, beispielsweise eine Hin und Her Bewegung oder eine Drehbewegung.

Das Reinigungselement kann einen Kanal zum Durchleiten und Abgeben von Fluid aufweisen.

Bei dem Fluid kann es sich um ein Reinigungsfluid, zum Beispiel eine Reinigungsflüssigkeit oder ein Reinigungsgas, handeln. Bevorzugt handelt es sich um Pressluft.

Der Kanal kann zum Absaugen von Luft und Bohrstaub aus dem Bohrloch dienen, oder zum Zuführen von Reinigungsfluid in das Bohrloch. Mit dem Reinigungsfluid kann der Bohrstaub gelockert und aus dem Bohrloch ausgetrieben werden. Das Reinigungsfluid kann über eine Zuleitung direkt in das Reinigungselement geführt werden. Bevorzugt wird das Reinigungsfluid durch das Basiselement zur Verfügung gestellt.

Der Kanal kann in einem Rohr angeordnet sein, das austauschbar an dem Reinigungselement angebracht sein kann, so dass das Reinigungselement für bestimmte Bohrlochweiten anpassbar ist.

Vorteilhafterweise ist das Rohr zumindest teilweise in das Bohrloch einführbar. Das Reinigungselement hat somit zumindest an einem Ende einen Aussendurchmesser, der kleiner ist als typische Bohrlochweiten.

Das Reinigungselement kann beweglich im Basiselement gelagert sein, bevorzugt entlang seiner Längsachse.

In einer vorteilhaften Ausführung weist das Reinigungselement eine Druckstösselfläche auf, so dass das Reinigungselement unter Beaufschlagung eines Fluids bewegbar ist. Beispielsweise kann das durch das Basiselement zu Verfügung gestellte Fluid dazu dienen, das Reinigungselement durch Druck auf die Druckstösselfläche gegenüber dem Basiselement zu verschieben. Basiselement und Reinigungselement bilden gleichsam eine Anordnung aus Gehäuse und Hubkolben.

Gleichzeitig kann das Fluid für Reinigungszwecke durch einen Kanal im Reinigungselement in das Bohrloch geführt werden. Dazu kann das Reinigungselement ein Rohr mit einer Druckstösselfläche umfassen oder als solches ausgeführt sein.

Mit Beaufschlagung durch das Fluid, insbesondere von Pressluft kommt das Reinigungselement in die Reinigungsposition und nimmt die Reinigung auf, zum Beispiel durch die unmittelbare Wirkung der Pressluft im Bohrloch oder durch den Antrieb eines Förderelements, zum Beispiel einer Bürste.

Die Bewegung und die Reinigung kann durch Versorgung mit Fluid ermöglicht werden.

Die Druckstösselfläche kann auf einem Druckstössel angeordnet sein, der gefedert gelagert ist. Ohne Beaufschlagung mit Fluid kann die Federkraft derart auf den Druckstössel wirken, dass das Reinigungselement in die Ruheposition gelangt.

In einer vorteilhaften Ausführung der Vorrichtung weist das Reinigungselement eine Hülse zum Anlegen an ein Bohrloch auf. Die Hülse dient zum Abschirmen des Bohrlochs von der Umgebung.

Die Hülse ist insbesondere an dem zum Bohrloch weisenden Betätigungsende des Reinigungselements angebracht, sodass die Hülse selbst nicht viel Platz einnimmt.

Die Hülse umfasst insbesondere eine Öffnung zum Abführen von Bohrstaub. Bevorzugt ist die Öffnung an einer Seite der Hülse angebracht, sodass der Bohrstaub gerichtet aus der Hülse austreibbar ist. Die Öffnung kann beispielsweise so angebracht sein, dass im montierten Zustand der Vorrichtung zum Reinigen der Bohrstaub im Betreib nach unten aus der Hülse herausfällt.

Die Hülse kann an eine Absaugeinrichtung anschliessbar sein, wobei die Öffnung in einer Fluidverbindung mit der Absaugeinrichtung steht.

Vorteilhafterweise weist die Vorrichtung eine Halterung zum Anbringen an eine Bohrvorrichtung auf, die insbesondere an dem Basiselement angebracht ist. Bei der Halterung kann es sich um eine Ringhalterung handeln, um ein Flanschelement, oder um ein Gegenstück zu einer an einer Bohrvorrichtung vorgesehenen Haltevorrichtung. Die Halterung kann austauschbar sein, so dass die Vorrichtung je nach Bohrvorrichtung mit einer passenden Halterung ausgestattet werden kann.

Die der Erfindung zu Grunde liegende Aufgabe wird ausserdem gelöst durch eine Anordnung zum Bohren und Reinigen mit einer Bohrvorrichtung zum Betätigen eines Bohrers, welche eine Vorrichtung zum Reinigen aufweist wie sie oben beschrieben ist. Die Bohrvorrichtung und die Vorrichtung zum Reinigen können separat angeordnet sein und unabhängig voneinander bewegbar und lagerbar sein. Bevorzugt ist die Vorrichtung zum Reinigen aber im Betrieb an der Bohrvorrichtung befestigt.

Bevorzugt ist die Vorrichtung zum Reinigen derart an der Bohrvorrichtung montiert, dass das zum Bohrloch weisende Betätigungsende des Reinigungselements in der Ruheposition hinter der Bohrerspitze angeordnet ist, also einen grösseren Abstand zur Wand, in der das Bohrloch gebohrt werden soll, als die Bohrerspitze aufweist.

Beim Heranführen des Bohrers an die Bohrstelle an der Wand und beim Bohren befindet sich das Reinigungselement typischerweise in der Ruheposition und stört dabei weder den Positionierungsvorgang noch den Bohrvorgang. Nachdem das Bohrloch gebohrt ist, wird die Anordnung zum Bohren und Reinigen in eine Position gebracht, in welcher das Reinigungselement die Reinigungsposition einnehmen kann und dabei an und/oder in das Bohrloch einführbar ist.

Die der Erfindung zu Grunde liegende Aufgabe wird ausserdem gelöst durch eine Montagevorrichtung zum Montieren von Halte oder Führungselementen in einem Aufzugschacht mit einer Vorrichtung zum Reinigen von Bohrlöchern wie oben beschrieben, insbesondere mit einer Anordnung zum Bohren und Reinigen wie oben beschrieben.

Die Montagevorrichtung kann eine mechatronische Installationskomponente, zum Beispiel einen Montagerobotor, umfassen, sodass Bohrlöcher teil oder vollautomatisch erstellt werden können.

Die Montagevorrichtung kann weitere Montagewerkzeuge umfassen, zum Beispiel eine Saugvorrichtung oder eine Schraubvorrichtung.

Die der Erfindung zu Grunde liegenden Aufgabe wird ausserdem gelöst durch ein Verfahren zum Reinigen eines Bohrlochs mit einer Vorrichtung zum Reinigen von Bohrlöchern wie oben beschrieben.

Das Verfahren umfasst zumindest die folgenden Schritte.

Das Reinigungselement wird aus der Ruheposition in die Reinigungsposition gebracht. Die Vorrichtung wird betätigt und das Bohrloch gereinigt, wobei insbesondere Fluid, insbesondere Pressluft durch das Reinigungselement in das Bohrloch geblasen wird. Die genannten Schritte müssen nicht nacheinander geschehen, sie können auch gleichzeitig ablaufen.

Abschliessend wird das Reinigungselement aus der Reinigungsposition in die Ruheposition gebracht.

Gemäss einer Ausführungsform wird das Reinigungselement durch Beaufschlagen des Reinigungselements mit Pressluft aus der Ruheposition in die Reinigungsposition gebracht.

Nachfolgend werden Ausführungsformen der Erfindung unter Bezugnahme auf die beigefügten Zeichnungen beschrieben.

Es zeigen:
Figur 1: eine seitliche Ansicht einer Anordnung zum Bohren und Reinigen mit einer Bohrvorrichtung zum Betätigen eines Bohrers und einer Vorrichtung zum Reinigen;
Figur 2: eine Schnittdarstellung einer Vorrichtung zum Reinigen in Ruheposition;
Figur 3: eine Schnittdarstellung einer Vorrichtung zum Reinigen in Reinigungsposition.

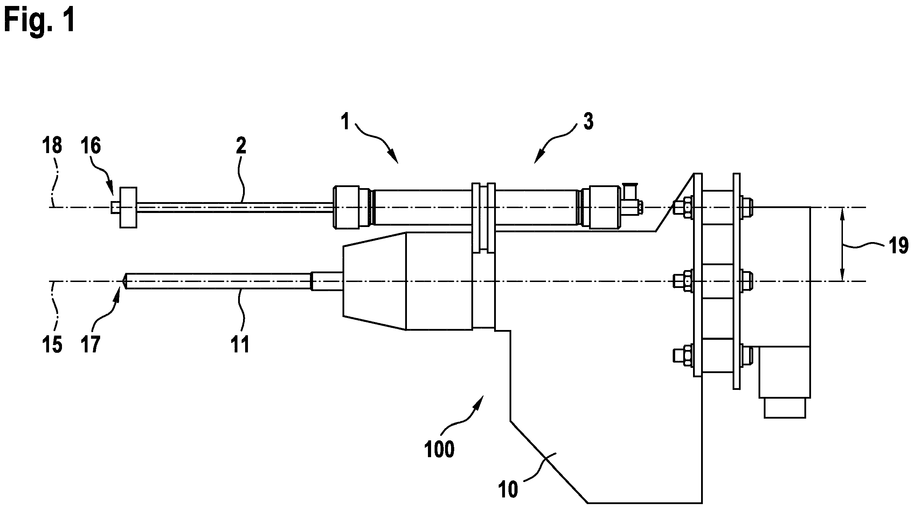

Figur 1 zeigt eine seitliche Ansicht einer Anordnung zum Bohren und Reinigen 100 mit einer Bohrvorrichtung 10 zum Betätigen eines Bohrers 11, an der eine Vorrichtung zum Reinigen 1 befestigt ist.

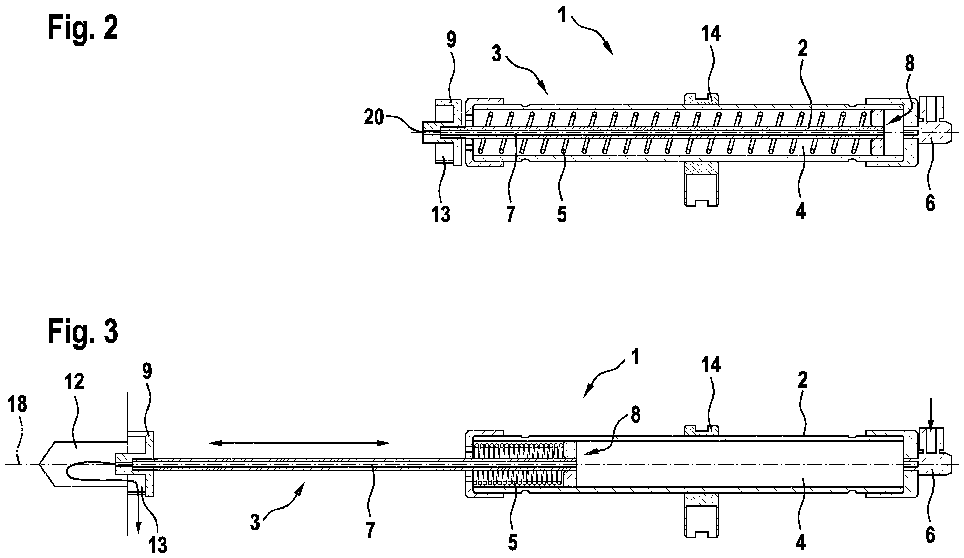

Die Vorrichtung zum Reinigen von Bohrlöchern weist ein Reinigungselement 2 auf, das derart an der Bohrvorrichtung 10 montiert ist, dass es von einer Ruheposition (siehe Figur 2) in eine Reinigungsposition und umgekehrt bringbar ist. Das Reinigungselement 2 umgreift oder umschliesst die Bohrachse 15 der Bohrvorrichtung 10 nicht, sondern kann wie beispielhaft in der Figur 1 gezeigt ist, in der Reinigungsposition neben dem Bohrer 11 angeordnet sein. Das Betätigungsende 16 des Reinigungselements 2 kann sich in der Reinigungsposition entlang der Bohrachse 15 auf Höhe des zum Bohrloch weisenden Endes 17 des Bohrers 11 befinden und zumindest teilweise über das Ende 17 des Bohrers in Richtung Bohrloch hinausragen. Die Bohrvorrichtung 10 muss also nach dem Bohren lediglich um den Abstand 19 zwischen Bohrachse 15 und Reinigungsachse 18 nach unten verschoben werden, um die Vorrichtung 1 in Betrieb zu nehmen, das Reinigungselement 2 in die Reinigungsposition zu überführen und das Betätigungsende 16 an das Bohrloch heranzuführen.

Die Vorrichtung zum Reinigen 1 ist derart an der Bohrvorrichtung 10 montiert, dass das zum Bohrloch 12 (siehe Fig. 3) weisende Ende 16 des Reinigungselements 2 nur in der Reinigungsposition, wie sie in Figur 1 dargestellt ist, über die Bohrerspitze 17 hinausragt und in der Ruheposition hinter der Bohrerspitze 17 angeordnet ist. Es wäre auch möglich, dass das Ende des Reinigungselements in der Reinigungsposition nicht über die Bohrerspitze hinausragt, sondern lediglich bis zur Bohrerspitze reicht.

Die Vorrichtung 1 umfasst beispielsweise ein Basiselement 3, wobei das Reinigungselement 2 bezüglich des Basiselements 3 zwischen der Ruheposition, wie sie beispielhaft in Figur 2 gezeigt ist und der Reinigungsposition, wie sie beispielhaft in Figur 3 gezeigt ist, bewegbar ist. In der Reinigungsposition erstreckt sich das Reinigungselement 2 von dem Basiselement 3 weg.

Das Reinigungselement 2 befindet sich in der Ruheposition zumindest teilweise innerhalb des Basiselements 3.

Das Reinigungselement 2 ist bezüglich des Basiselements 3 entlang der Reinigungsachse 18 verschiebbar. Das Basiselement 3 weist einen Hohlraum 4 zur Aufnahme des Reinigungselements 2 in der Ruheposition auf.

Das Reinigungselement 2 ist gegenüber dem Basiselement 3 gefedert gelagert. Durch die Federkraft eines Federelements 5 wird das Reinigungselement 2 in die Ruheposition gedrückt.

Das Basiselement 3 besitzt einen Anschluss 6 für ein Reinigungsfluid, zum Beispiel Pressluft, welche durch einen Kanal 7 des Reinigungselements 2 zum Bohrloch 12 geführt werden kann.

Das Reinigungselement 2 ist mit einer Druckstösselfläche 8 ausgestattet. Strömt Pressluft durch den Anschluss 6 des Basiselements, so wird das Reinigungselement 2 gegen die Kraft des Federelements 5 in die Reinigungsposition, also in Richtung Bohrloch 12 bewegt.

An dem zum Bohrloch 12 weisenden Betätigungsende 16 weist das Reinigungselement 2 eine Hülse 9 auf. Diese besitzt eine nach unten weisenden Öffnung 13 zum Abführen von Bohrstaub. An der Hülse 9 ist ein Innenrohr 20 angebracht, welches den Kanal 7 des Reinigungselements 2 verlängert. Das Innenrohr 20 ist in das Bohrloch 12 einführbar, sodass die Pressluft gezielt in das Bohrloch 12 eingeführt werden kann. Die Hülse 9 bewegt sich mit dem Reinigungselement 2 in die Ruheposition und stört ebenfalls nicht den Bohrvorgang.

Die Vorrichtung 1 ist mit einer Halterung 14 zum Anbringen an eine Bohrvorrichtung 10 ausgestattet, die an dem Basiselement 2 angebracht ist.

## Patentansprüche

1. Vorrichtung zum Reinigen von Bohrlöchern (1), umfassend ein Reinigungselement (2) mit einem Betätigungsende (16), welches in Richtung eines zu reinigenden Bohrlochs (1) orientiert ist,
**dadurch gekennzeichnet, dass**
das Reinigungselement (2) derart an einer Bohrvorrichtung (10) mit einem Bohrer (11), welcher eine Bohrerspitze (17) aufweist, montierbar ist, dass es im montierten Zustand von einer Ruheposition in eine Reinigungsposition und von einer Reinigungsposition in eine Ruheposition bringbar ist, und dass das Betätigungsende (16) des Reinigungselements (2) in der Reinigungsposition in Richtung einer Bohrachse (15) zumindest bis zur Bohrerspitze (17) reicht und in der Ruheposition hinter der Bohrerspitze (17) angeordnet ist.

2. Vorrichtung gemäss Anspruch 1, wobei das Reinigungselement (2) im montierten Zustand die Bohrachse (15) der Bohrvorrichtung (10) nicht umgreift oder umschliesst.

3. Vorrichtung gemäss Anspruch 1 oder 2, wobei das Betätigungsende (16) des Reinigungselements (2) zumindest teilweise in ein Bohrloch (12) einführbar ist.

4. Vorrichtung gemäss Anspruch 1, 2 oder 3, wobei die Vorrichtung (1) ein Basiselement (3) umfasst,
und wobei das Reinigungselement (2) bezüglich des Basiselements (3) zwischen der Ruheposition und der Reinigungsposition bewegbar ist, wobei sich das Reinigungselement (2) in der Reinigungsposition von dem Basiselement (3) weiter weg erstreckt als in der Ruheposition, und sich das Reinigungselement (2) insbesondere in der Ruheposition zumindest teilweise innerhalb des Basiselements (3) befindet.

5. Vorrichtung gemäss Anspruch 4, wobei das Reinigungselement (2) bezüglich des Basiselements (3) verschiebbar ist, wobei das Basiselement (3) insbesondere einen Hohlraum (4) zur Aufnahme des Reinigungselements (2) in der Ruheposition aufweist.

6. Vorrichtung gemäss einem der vorhergehenden Ansprüche, wobei das Reinigungselement (2), insbesondere gegenüber einem Basiselement (3), gefedert gelagert ist.

7. Vorrichtung gemäss einem der Ansprüche 4 - 6, wobei das Basiselement (3) einen Anschluss (6) für ein Fluid aufweist.

8. Vorrichtung gemäss einem der vorhergehenden Ansprüche, wobei das Reinigungselement (2) einen Kanal (7) zum Durchleiten und Abgeben von Fluid, insbesondere Pressluft, aufweist.

9. Vorrichtung gemäss einem der vorhergehenden Ansprüche, wobei das Reinigungselement (2) eine Druckstösselfläche (8) aufweist, so dass das Reinigungselement (2) unter Beaufschlagung mit einem Fluid bewegbar ist.

10. Vorrichtung gemäss einem der vorhergehenden Ansprüche, wobei das Reinigungselement (2) eine Hülse (9) zum Anlegen an ein Bohrloch (12) aufweist, insbesondere an einem zum Bohrloch (12) weisenden Betätigungsende (16), und die Hülse (9) insbesondere eine Öffnung (13) zum Abführen von Bohrstaub umfasst.

11. Vorrichtung gemäss einem der vorhergehenden Ansprüche, wobei die Vorrichtung (1) eine Halterung (14) zum Anbringen an eine Bohrvorrichtung (10) aufweist, die insbesondere an dem Basiselement (2) angebracht ist.

12. Anordnung zum Bohren und Reinigen (100) mit einer Bohrvorrichtung (10) zum Betätigen eines Bohrers (11) aufweisend eine Vorrichtung zum Reinigen (1) gemäss einem der Ansprüche 1-11.

13. Montagevorrichtung zum Montieren von Halte oder Führungselementen in einem Aufzugschacht mit einer Vorrichtung (1) zum Reinigen von Bohrlöchern gemäss einem der Ansprüche 1-11, insbesondere mit einer Anordnung zum Bohren und Reinigen (100) gemäss Anspruch 12.

14. Verfahren zum Reinigen eines Bohrlochs mit einer Vorrichtung (1) zum Reinigen von Bohrlöchern gemäss einem der Ansprüche 110, umfassend die folgenden Schritte:
- Reinigungselement (2) aus der Ruheposition in die Reinigungsposition bringen,
- Betätigen der Vorrichtung, insbesondere Einblasen von Fluid, insbesondere Pressluft durch das Reinigungselement (2) in das Bohrloch (12),
- Reinigungselement (2) aus der Reinigungsposition in die Ruheposition bringen.

15. Verfahren gemäss Anspruch 14, wobei das Reinigungselement (2) durch Beaufschlagen des Reinigungselements (2) mit Fluid, insbesondere Pressluft aus der Ruheposition in die Reinigungsposition gebracht wird.
